# EUROPEAN PATENT APPLICATION

(11) **EP 2 854 351 A1**
(43) Date of publication of application: **01.04.2015**
(21) Application number: 13382378.1
(22) Date of filing: 30.09.2013
(51) Int. Cl.: H04L 12/715, H04L 12/703

(54) **Method and system for restoring and recovering traffic in multi-layer communication networks after two or more failures and virtual controller device**

(71) Applicant: Telefonica S.A., 28013 Madrid (ES)
(72) Inventor: Gonzalez de Dios, Oscar, 28013 Madrid (ES); Lopez Alvarez, Victor, 28013 Madrid (ES); Muñoz del Nuevo, Fernando, 28013 Madrid (ES)
(74) Representative: Carlos Hernando, Borja

(57) **Abstract**

The method in order to recover said traffic from a second failure uses at least one virtual controller device for establishing, for a selected pair of upper layer nodes of a network, an alternative path through a lower layer of said network for conducting traffic, and for deleting selected paths through the lower layer, said at least one virtual controller device obtaining transport network information provided by a transport layer computation entity computing the feasibility of a new link between said pair of layer nodes using said transport network.

The system implements the method of the invention.

## Description

### Field of the art

The present invention generally relates to the field of communication networks and in particular, to a method and system for restoring and recovering traffic in multi-layer communication networks after two or more failures and to a virtual controller device.

### Background of the invention

Current Telecommunication Networks are based on a hierarchical layering, leading to a set of client-server relation between layers. For example, the transport layer is in charge of providing long distance point to point high capacity circuits between points of the IP/MPLS layer. Thus, one layer acts as client and another layer as server. The Telecommunication networks based on the hierarchical layering are typically known as 'multi-layer' networks.

Survivability, defined as the ability of systems to continue to function in case of failures independently of what causes these failures, is highly important in the case of telecommunication networks, as it allows maintaining the connectivity (e.g. maintaining the connectivity to Internet, between business locations, etc.). The concept of "availability", defined as the percentage of time in which the services offered by the network are accessible, allows quantifying the level of survivability of a network. The network survivability is determined by the *Mean Time Between Failures (MTBF),* the *Mean time to repair (MTTR),* the resources dedicated for survivability and the specific network survivability strategy.

Failures occur in the installed infrastructure, such as routers, cards, power supplies, fibers, amplifiers, etc. Unfortunately, fiber cuts are common due to robbery, natural disasters, road-works, and its nature is unpredictable. On the other hand, equipment manufactures guarantee a certain mean time between failures. Thus, mean time between failures cannot be changed with network survivability techniques. On the other hand, whenever there is a failure (device misconfigured, broken, fiber cut), it needs to be repaired. The MTTR measures how fast the failure is repaired. It is trivial that one way to increase the survivability is to repair the network quickly. However, in the case of a high availability target (e.g. 99,999%), this is unrealizable with human intervention. Finally, a way to achieve such high network availability is by triplicating (or more) the deployed infrastructure, which also turns out to be infeasible in many cases.

In the existing survivability techniques and systems, each network layer has its own survivability mechanism to solve the connectivity problems derived from failures. A summary of the survivability techniques can be found in RFC 4427. For example, protection mechanisms are based on adding dedicated resources, which will be used in case of failure. Protection means that backup resources are disjoint from nominal ones, that is, nominal resources (the ones used under normal conditions) do not share fate with the backup resources, which will be able to recover traffic when a failure appears in the nominal resource. An important network planning work must be done to over dimension the network in the correct way. An important feature of protection is that the backup resources can be activated in advance, allowing a fast recovery.

There are different protection schemes defined based on how are the resources used. 1+1 schemes consist on splitting the traffic between the resources thus leading to a 50% occupation. 1:1 models use all the resources in the nominal path, while the backup path uses no resources. N:M schemes operate the same way than 1:1 schemes, but with M options to recover N resources.

The restoration concept appears to reduce the cost of protection schemes. Protection schemes keep unused resources. Restoration makes use of the resources to transmit traffic, but it does not reserve resources to recover any traffic. This procedure needs to compute the new restoration path towards destination, when the failure occurs. As advantage, restoration allows a more efficient resource usage in the network, but, as the path computation takes some time, the traffic is recovered later than in the protection scheme. Moreover, the network behavior is less predictable, making the network planning process more complex.

The mentioned protection and restoration survivability techniques are implemented by systems running in the network nodes. However, per-layer techniques can only use resources from one layer and are inefficient.

Multi-layer restoration has been proposed to use the resources of the server network layer to recover from failures of the client layer more efficiently. A known patent in the field is US 7346277 B2 that presents a system and procedure for joint-layer restoration in packet-over optical networks. By means of a node structure of an IP router and a dynamically reconfigurable OXC, resources of both IP and WSON layer are considered when restoring. In an embodiment, in case of failure affecting the IP layer, the procedure can choose between rerouting at the IP layer using already deployed wavelengths, establish a new wavelength, or perform a mixture of both. Such patent requires, on the one hand, a new node structure, and on the other hand, the procedure needs available resources (at IP or optical layer) to perform the restoration.

The present invention, on contrary, makes use of the existing functionalities of the different control planes. The interconnection between the control planes is achieved via the UNI interface. There are three elements defined in the multi-layer control plane that are used by the invention:
- TE-Links concept is applied to two types of network adjacencies; the connections between both layer equipment (known as inter-layer links) and abstracted connection between two nodes from the same layer, which crosses other layers to establish the adjacency. This concept allows operating in a simple way keeping in mind at any moment the information relevant for each procedure to be performed in the network.
- Hierarchical LSPs is a model definition for encapsulating different switching technologies to allow higher granularity in resource reservation across layers. This hierarchy of LSPs is achieved through the encapsulation of LSPs and helps to give a logic vision of all the connections in the different layers of the network. One of the main goals of hierarchical LSPs is to increase network scalability.
- ML-PCE is a standard entity evolution from the transport layer PCE that will also take care about IP/MPLS topology allowing multi-layer path computation. Multi-layer PCE can operate collaborating with both lower layer PCE and high layer PCE (normally transport layer and IP/MPLS PCEs).

The UNI is an interface for inter-layer signaling and resource reservation procedure within the control plane. The UNI interface consists on a definition of how resources from server layer should be requested in order to get a resource reservation between two top layer end points. Using this interface, new TE-Links can be established creating a virtual-topology in the top layer. UNI defines as protocol for signalling exchange the RSVP-TE. In case of GMPLS networks, UNI has been extended in order to support this control plane. These extensions provide mechanisms for UNI signalling that are compatible with GMPLS and are defined in the following IETF RFCs: [RFC3471][RFC3473]. The extensions basically consist on including time-division, wavelength and spatial switching particularities in the resource definition and information exchange to reserve path across transport layers.

The industry defines a framework for IP/MPLS over transport networks where some procedures are presented to solve failures in each network layer separately. The problems with the existing solutions are that they not contemplate a procedure to recover connectivity when failures in a layer cannot be recovered by using the same layer resources. The IETF standard [RFC5623] defines inter-layer coordination and cooperation procedures for protect upper layer LSPs using lower layer resources but in any case, a upper layer failure can be solved by means of these procedures. In this situation a problem arises when there are not enough free resources in a single layer to recover traffic itself leading to availability problems.

As explained before, protection schemas have reserved resources to recover traffic in case of failure. These resources are not used if no failure is present in the network creating a high inefficiency for resource usage. The unused resources, if a new system and procedures are defined, can be used to recover traffic in collaboration of all layers creating new paths between affected resources with traffic losses to avoid availability degradation,

As said before, there are few procedures to use effectively the multi-layer restoration in a network, but they have to be implemented in a specific node, as patent US 7346277 B2 which is focused on a specific IP over WDM mode, and they do not manage to rearrange the existing resources of the network to recover from second failure scenario.

Patent application EP 2387183 A1 discloses a system and method for traffic flow recovery in a multilayer communication network, therefore allowing the sharing of recovery resources between various layers of the network. The difference between EP 2387183 A1 with respect to the present invention is that such patent application does not provide a mechanism to re-allocate and reconfigure the multi-layer network in order to extend and increase network availability.

Moreover, known IETF standards also do not define or present any procedure of mechanism to allow the multi-layer resource configuration as proposed in this invention guaranteeing the availability not to be affected but increased as result of the mechanisms defined.

### Summary of the Invention

The invention proposes a solution to enhance network availability exploiting the multilayer capabilities of the network in a particular manner.

Due to the layer separation, upper layer nodes of a given network such as IP/MPLS layer nodes, are not aware about transport layer resources and vice versa and survivability mechanisms act in a per-layer basis, therefore an object of the invention is to provide an effective mechanism to increase the availability of an upper layer (i.e. an IP/MPLS network) by using resources of a lower layer (i.e. a transport layer). To that end, the present invention provides a mechanism that is connected preferably to a multi-layer IP/MPLS network over transport network and a procedure that combines 1+1 protection and multilayer restoration, and increases network availability.

According to a first aspect, there is provided a method for restoring and recovering traffic in multi-layer communication networks after two or more failures, wherein a multi-layer communication network comprises at least two different network layers, an upper layer, said upper layer conducting traffic and including a duplicated infrastructure with a plurality of pair of upper layer nodes, and a lower layer, said lower layer being a transport network providing connectivity between upper layer nodes, wherein traffic is recovered after a first failure of at least one upper layer node of said pair of layer nodes or one lower layer node or one link between lower layer nodes, in which said traffic is conducted using said duplicated upper layer infrastructure.

On contrary of the known proposals, in order to recover said traffic from a second failure the method uses at least one virtual controller device for establishing, for a selected pair of upper layer nodes, an alternative path through the lower layer for conducting said traffic, and for deleting selected paths through the lower layer, said at least one virtual controller device obtaining transport network information provided by a transport layer computation entity computing the feasibility of a new link between said pair of layer nodes using said transport network.

In an embodiment, a path computation entity related layer the upper layer can also be used for recovering said traffic from a second failure.

The feasibility of said new link between said pair of layer nodes calculated by said transport layer computation entity, for instance a lower layer path computation entity, can involve computing the reserved maximum bandwidth needed in said link, the availability of free interfaces to hold the new link, and the links to be torn down to free an interface to hold the new link.

In an embodiment, when no connection is available between two of said pair of layer nodes, one or more redundant links can be deleted in order to free interfaces. Moreover, one or more links between another pair of layer nodes can be created by means of said upper layer path computation entity through an interaction with said virtual controller device.

Generally, the interaction between the upper layer path computation entity and the virtual controller device will include:
- the sending of a Potential Virtual Topology retrieve request message from the upper layer path computation entity to the virtual controller device in order to request the potential virtual topology available;
- the sending of one or more TE-Link suggestion message from the upper layer path computation entity to the virtual controller device; and
- a TE-Link suggestion confirmation message or a TE-Link suggestion failure message from the virtual controller device to the upper layer path computation entity.
- the sending of one or more TE-Link Tear down suggestion message from the upper layer path computation entity to the virtual controller device; and
- a TE-Link Tear Down suggestion confirmation message or a TE-Link Tear Down failure message from the virtual controller device to the upper layer path computation entity.

In an embodiment, other virtual controller devices can be also coordinated in order to establish said alternative path, wherein the coordination comprises suggesting the creation of new connections or tearing down existing connections to other pair of layer nodes through said other plurality of virtual controller devices.

According to a second aspect, there is provided a system for restoring and recovering traffic network in multi-layer communication networks after failure, wherein a communication network comprises:
- at least two different network layers, an upper layer and a lower layer, said upper layer including a duplicated infrastructure with a plurality of pair of layer nodes and said lower layer being a transport network; and
- a transport layer computation entity at least computing a path between two transport nodes.

On contrary of the known proposals, in the system at least one virtual controller device, located in a single entity or distributed along the communication network in multiple entities, controls one or more of said pair of layer nodes and establishes, for a selected pair of upper layer nodes, an alternative path through the lower layer for conducting said traffic, and deletes selected paths through the lower layer.

In an embodiment, the upper layer can be for instance an IP/MPLS network and the system can further include an IP/MPLS path computation entity reachable by said plurality of pair of layer nodes and by the virtual controller device which is configured to compute paths in the upper layer and to create, when no connection is available between said pair of layer nodes, another link to another pair of layer nodes.

The interfaces between the different entities or elements of the proposed system mainly will be: a first communication interface configured for providing communication between said IP/MPLS path computation entity and said virtual controller device; and a second communication interface configured for providing communication between said transport layer computation entity and the virtual controller device.

According to a third aspect, there is provided a virtual controller device that can include: operating means for running in at least two different network layers, an upper layer and a lower layer, said lower layer being a transport network; and first cooperating means for interacting with a transport layer computation entity to obtain transport network information.

The virtual controller device of the third aspect can also include second cooperating means for interacting with an IP/MPLS path computation entity. Moreover, it can have means for determining other virtual controller devices in said multi-layer communication network and suggesting means for creating new connections or tearing down existing ones to other pair of layer nodes through said other plurality of controller devices determined.

As said current IP/MPLS nodes are not aware about transport layer resources and vice versa, therefore the survivability mechanisms work in a per-layer basis. So, multi-layer coordination is not possible, because there is not information exchange between the layers. The invention allows providing multi-layer restoration, which is an effective mechanism to increase the IP/MPLS network availability using resources of the transport layer. As restoration process are by definition online, this mechanism runs dynamically based on the network status information of the IP/MPLS and the transport layer.

### Brief Description of the Drawings

The previous and other advantages and features will be more fully understood from the following detailed description of embodiments, with reference to the attached, which must be considered in an illustrative and non-limiting manner, in which:
Fig. 1 illustrates the proposed architecture of the present invention according to some embodiments.
Fig. 2 is an example of how a possible transport path computation can be computed by the proposed invention.
Fig. 3 illustrates the procedure for creating a new link in the upper layer when there is no connectivity already available in said layer, according to an embodiment of the invention.
Fig. 4 is a flow chart illustrating the procedure for the multi-layer recovery process.
Fig. 5 illustrates a particular embodiment of the invention in which the virtual controller is used for double failure restoration in an IP/MPLS layer.
Fig. 6 illustrates how a new link is created after the embodiment described in Fig. 5 has occurred.

### Detailed Description of Several Embodiments

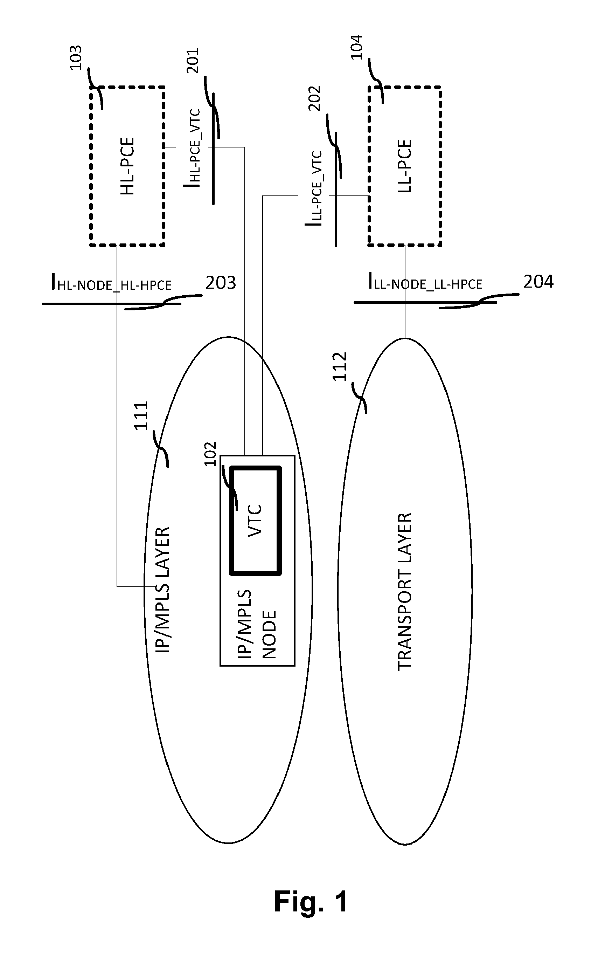

Fig. 1 shows the different entities that can be involved, according to some embodiments, in the architecture defined by the invention. These entities are:
A virtual controller device or virtual topology controller (VTSC) 102 which is the entity in charge of keeping the status of inter-layer links and virtual links on the communication network topology, in this particular case an IP/MPLS. It also will calculate the maximum capacity possible between each pair of nodes in the upper layer or IP/MPLS layer with the corresponding lower layer path stored. In an embodiment, it can also store that information as a virtual topology table. As explained before, the VTSC 102 can be located in a single entity or distributed along the communication network in multiple entities.

A Transport Layer 112 that contains all transport nodes that are in a single transport routing domain.

An IP/MPLS Layer 111 containing all upper layer nodes (IP/MPLS nodes) those are in a single IP/MPLS routing domain.

A transport layer computation entity or transport layer PCE (LL-PCE) 104 that is a route computation element reachable by all the transport nodes and the VTSC 102 to get new paths between two transport nodes.

Optionally, as also illustrated in Fig. 1, an IP/MPLS PCE (HL-PCE) 103 can also be part of the proposed architecture. This computation element 103 is a route computation element reachable by all IP/MPLS nodes and by the VTSC 102 meant to help the IP/MPLS nodes to calculate new paths towards other IP/MPLS when these nodes are not capable of compute this path themselves due to the lack of information.

According to the architecture proposed in Fig. 1, the interfaces between the entities are the following:
- IHL-PCE-VTSC 201: provides a communication interface between the HL-PCE 103 and the VTSC 102. This interface is based on a PCEP protocol, but it requires some extensions.
- ILL-PCE-VTSC 202: provides a communication interface between the LL-PCE 104 and the VTSC 102. Like IHL-PCE-VTSC 201, this interface is PCEP protocol with extensions.
- IHL-NODE-HL-HPCE 203: It provides a communication interface between the HL-PCE 103 and the IP/MPLS nodes. This interface uses state of the art PCEP Protocol.
- ILL-NODE-LL-HPCE 204: It provides a communication interface between the LL-PCE 104 and the VTSC transport nodes. This interface uses state of the art PCEP Protocol.

In certain embodiments it is also possible to have a communication interface between VTSCs 102 and send messages between them. This interface is similar to the IHL-PCE-VTSC 201 and ILL-PCE-VTSC 202 interfaces, using PCEP with extensions.

The invention, in order to perform the communication between VTSCs 102 and HL-PCE 103 defines new messages in order to implement the new communication requisites. To that end, the invention makes use of an already defined protocol and adds the new messages and fields for allowing all new messages and information to perform the desired operations. The most suitable protocol for this task is the PCEP protocol. The PCEP protocol has the following messages: *Open, Keepalive, Request, Response, Notify, Error y Close.* The new messages designed are the following:
- TE-Link suggestion: From HL-PCE 103 to VTSC 102.
- TE-Link suggestion confirmation: From VTSC 102 to HL-PCE 103.
- TE-Link suggestion failure: From VTSC 102 to HL-PCE 103.
- TE-Link Tear Down suggestion: From VTSC 102 to VTSC 102.
- TE-Link Tear Down suggestion confirmation: From VTSC 102 to VTSC 102.
- TE-Link Tear Down suggestion failure: From VTSC 102 to VTSC 102.
- Potential Virtual Topology retrieve request: From HL-PCE 103 to VTSC 102.
- Potential Virtual Topology retrieve response: From VTSC 102 to HL-PCE 103.

The VTSCs 102 can be organized in the network by means of two different architectures. That is, all VTSCs 102 are peer, in other words, they are hierarchically at the same level or, alternatively, a parent VTSC 102 is in charge of the learning process all VTSCs 102 existence in the network and communicates with them. The children VTSCs 102 have no idea of other VTSCs 102 except the parent VTSC 102. Therefore, the invention will have to advertise and discovery VTSCs 102 and the network elements under their control taking into account said two different architectures.

In the first case, no hierarchy (Broadcast), all VTSC 102 can advertise the domain Id they are in charge of or also, all VTSC 102 can advertise the IPs of the domain nodes they are in charge of.

In the second case, hierarchical approach (Parent and children), there are three different ways of advertising. For instance, a child VTSC advertises to the parent the domain Id it is in charge of. Another way is when child VTSC advertises the IPs of the domain nodes it is in charge of. Finally, a parent VTSC advertises its reachability and the domains it is aware of.

In an embodiment, when a VTSC 102 is plugged in a network it will start to advertise its domain information as defined before through all its interfaces.

In another embodiment, when a VTSC 102 receives an advertisement from other VTSC 102 will act as following:
- In the non-hierarchical scenario, the VTSCs 102 will re-advertise the received advertisement but only through the interfaces where it has received another advertisement from a different VTSC 102.
- In the hierarchical scenario, the parent VTSC 102 will not re-advertise other VTSCs 102 advertises, it will store the domains information and only will inform other VTSCs 102 about other domains existence. The child VTSC will only receive advertises from a parent VTSC 102 and it will only store its reachability information for future requests.

In another embodiment when a VTSC 102 does not receive any advertise from a VTSC 102 it has stored during a certain time, it will remove it.

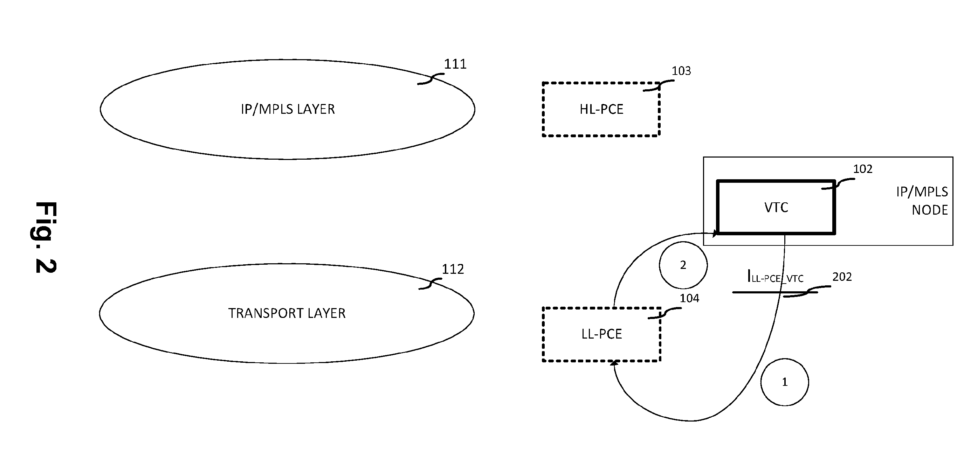

In reference now to Fig. 2 it is showed an embodiment of a transport path computation. The VTSC 102 to that end has a new task, to compute all possible links between each pair of IP/MPLS nodes in its own domain.

The VTSC 102 may follow the next procedure: The VTSC 102 first will be selecting each pair of IP/MPLS nodes to compute the feasibility of a new link between them using the transport layer 112 using the available free interfaces. For each pair of nodes, it will request a new path to the LL-PCE 104 with the lower granularity of the transport layer (e.g. 1 Gbps) provided it does not exceed the available free interfaces at the IP/MPLS node. It will be done using the interface extended PCEP 204. Second, if the LL-PCE 104 answers affirmatively, the VTSC 102 will store in the virtual topology table the new link including the following information (ERO in the transport layer, capacity requested and metric returned by the LL-PCE). This new link included will be marked as 'free'. Following, in a third step, the VTSC 102 will retry second step but increasing the capacity (with granularity steps) until it reaches the maximum value (e.g. 2 Gbps, 3 Gbps ... until 10 Gbps). Finally, once the maximum is reached, the VTSC 102 changes to another pair of nodes and re-starts the process.

Alternatively, the VTSC 102 can also compute the feasibility of a new link between each pair of IP/MPLS nodes using the transport layer employing occupied interfaces that are protected. In this case, for each pair of nodes, the VTSC 102 will request a new path to the LL-PCE with the lower granularity available at the transport layer (e.g. 1 Gbps), provided it does not exceed the available free interfaces at the IP/MPLS node, indicating explicitly to reuse resources at source and destination. This process will be done using the interface extended PCEP 204. If the LL-PCE answers affirmatively, the VTSC 102 will store in the potential topology table the new link with the following information (ERO in the transport layer, capacity requested and metric returned by the LL-PCE). It will mark the entry as 'currently not free' and will annotate the link id used at the source interface and destination interface. It can happen that in some cases only the source or destination interfaces are occupied. The VTSC 102 will retry the new link from the potential topology table increasing the capacity (with granularity steps) until it reaches the maximum value (e.g. 2 Gbps, 3 Gbps ... until 10 Gbps). Finally, once the maximum is reached, the VTSC 102 changes to another pair of nodes and re-starts the process.

As an improvement, the VTSC may also compute the feasibility of a new link between each pair of IP/MPLS nodes using the transport layer employing both: the available free interfaces and the occupied interfaces that are protected. In this case, the above described procedures will be executed one followed by another. Since the previously procedure is performed, the VTSC 102 will be able to offer to the HL-PCE 103 current and future multi-layer paths to solve new connectivity required between each pair of nodes in the IP/MPLS layer 111. The result of the procedure will be the creation and filling of table 1.

**Table 1: Possible paths at the transport layer**

| Pair of IP/MPLS Nodes | Lower Layer ERO | Metric | Maximum Capacity |
|---|---|---|---|
| (A,B) | Node 1 -Node 2 - Node 5 | 5 | 40 Gbps |
| (A,C) | Node 1 - Node 3 - Node 6 | 7 | 10 Gbps |

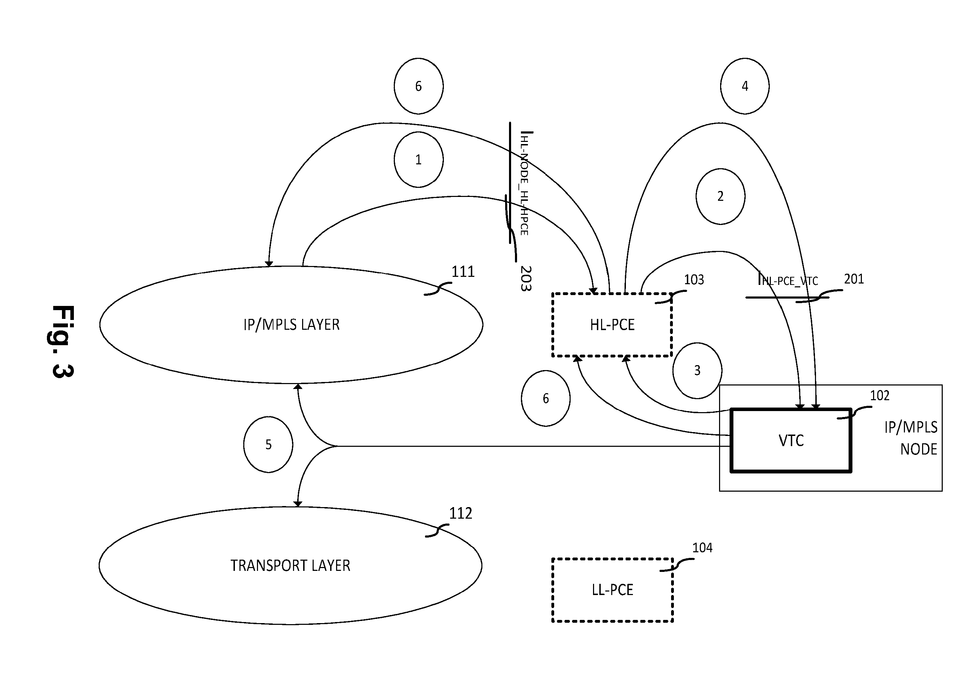

In reference to Fig. 3, it is described the procedure for creating a new link in the IP/MPLS layer 111 when there is no connectivity already available in the IP/MPLS layer 111. In the embodiment of Fig. 3, 1) a node from IP/MPLS needs to establish a new path to other IP/MPLS node (because of any reason, it could be a failure or lack of resources to drive the current traffic). The IP/MPLS node requests the HL-PCE 103 a path to reach the destination node using the current standard PCEP protocol. In 2) The HL-PCE 103 tries to compute the path in the higher layer but the result is no path, then it connects to the VTSC 102 to request for the virtual topology available. Extended PCEP is used in this interface. In 3) The VTSC 102 (that has already stored the current virtual topology and the maximum future topology) fills the multi-layer ERO with the transport layer path information. Extended PCEP is used to answer with the multi-layer path. 4) Then, the HL-PCE 103 inspects the VTSC 102 response, if the response is a multi-layer path it will send a TE-Link suggestion message (PCEP extension message) to the VTSC 102. Following 5) the VTSC 102 splits the HL-PCE 103 request in new inter-layer links to be established. Then it starts configuring each new link needed. Next 6), The VTSC 102 updates the information in a high layer path to the HL-PCE 103 and finally 7) the HL-PCE 103 returns the single layer path to the IP/MPLS node that requested at the beginning the new link towards its destination IP/MPLS node.

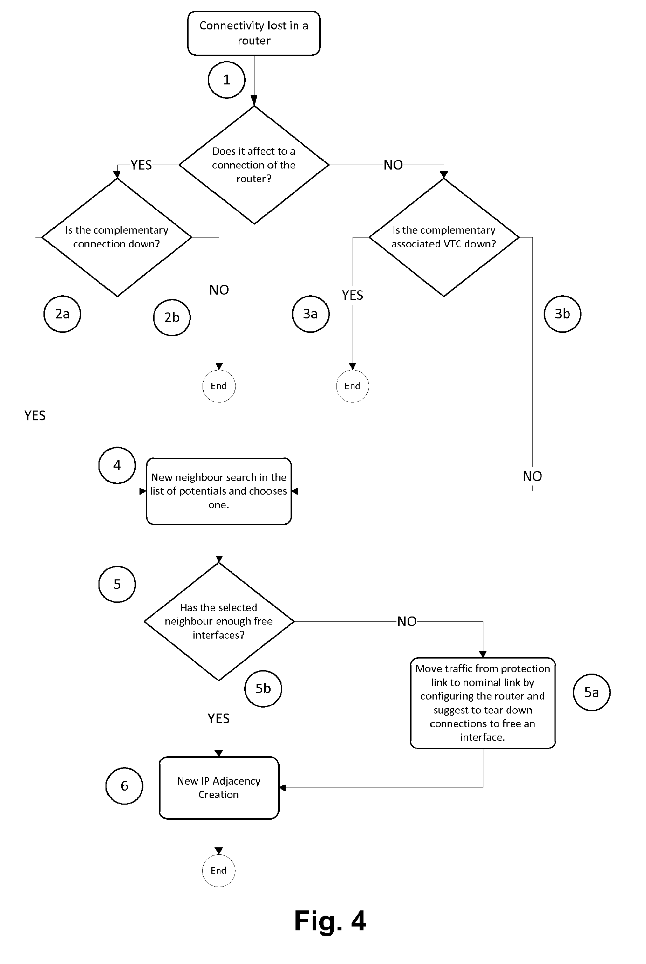

As explained before, in the invention for protection and multilayer restoration purposes the network is duplicated. Therefore, each IP/MPLS node is duplicated having a role of 'primary' or 'secondary'. Also, connections between nodes (from now on in this particular embodiment termed as routers) are made through the transport network 112. Every primary router is connected to its correspondent secondary router. The connections through the transport network 112 are made both between primary routers and between secondary routers. The primary connection is SRLG disjoint with respect to the secondary connection (primary connection is when two primary routers and connected, and secondary connection, when two secondary routers are connected). The method runs in every VTSV 102 and per router controlled. It has to be noted that, depending on the embodiment, a VTSC 102 can control one or several routers. Fig. 4 describes the followed process:
1. A loss of connectivity in the router or in its complementary router is detected (e.g. by a neighbor loss trap or by any other means). State-of-the art protection mechanism act in parallel in the network (no actions are taken in the procedure) to recover the traffic. The lost connection is stored.
2. If the loss of connectivity belongs to a connection of the router:
   a. If the complementary connection is already down, then go to step 4.
   b. If the complementary connection is up, no actions are taken.
3. If the loss of connectivity belongs to a connection of the complementary router, check if the complementary router and associated VTSC 102 are up.
   a. If they are up, no actions are taken (as the VTSC 102 controlling the complementary router will take care).
   b. If they are down (either the complementary router or the VTSC controlling the complementary router) and the connection is also down then initiate the multi-layer restoration procedure then go to step 4, as both the connection and the complementary connection are down.
   c. If they are down (either the complementary router or the VTSC controlling the complementary router) and the connection is up, no actions are taken, as only the complementary connection is down.
4. A new neighbor is searched in the list of potential new neighbors in the potential adjacencies' table, starting in from the lower cost.
5. For the given potential neighbor, find if there are interfaces available with enough capacity.
   a. If there are available interfaces, one is chosen.
   b. If no interfaces are available, it is suggested to tear down connection/s in the new neighbor found to free an interface.
6. Start the procedure New IP Adjacency Creation. Once this connection is created, the traffic is moved to the new IP link automatically using IGP protocols.

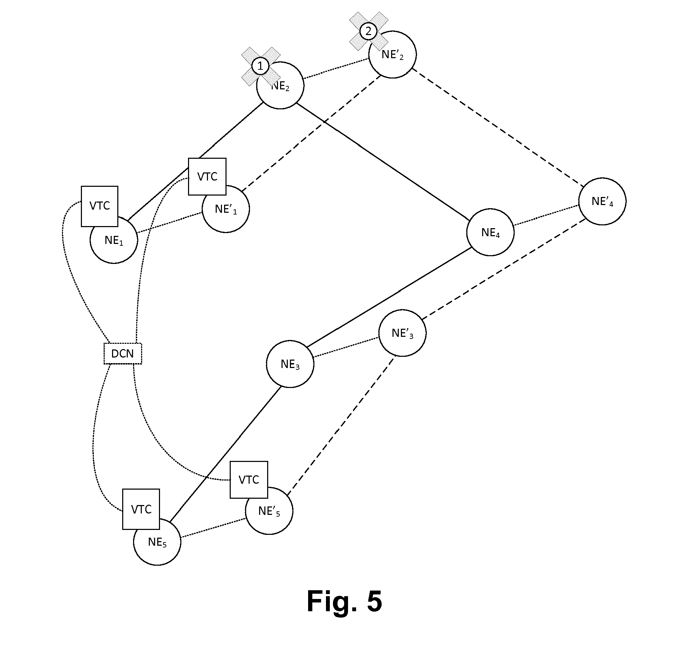

Fig. 5 illustrates an embodiment of the invention when executing a double failure restoration using the VTSC 102. As said, the typical use case for the VTSC 102 is in the context of double failures affecting the IP/MPLS layer 111. The IP/MPLS layer pair of nodes named NE1 (primary) and NE1' (secondary) are linked to the NE4 pair by means of the intermediate nodes NE2'. This is the typical 1+1 protected network that allows when a single failure takes place to recover the traffic really fast (under 50 msec typically). If NE2 fails, then the protection mechanism moves all the traffic from NE1' to NE4' (typically when both routers are active the traffic is 50% split in both paths) to the NE1'-NE2' NE4' path keeping the traffic flowing towards NE4'. The problem comes with the second failure, then, current mechanisms cannot restore the traffic in this kind of scenarios and the availability really comes down (it is important to note that for availability objectives of 5 nines, the maximum unavailable time on a year must be under 5 minutes). That's a really important issue in particular SLAs with some customers and special services such as telemedicine, banking sector, military applications. Therefore, the invention, increases the availability parameter by creating new IP/MPLS adjacencies across the transport layer 112 allowing to recover the traffic using new temporal paths established with the VTSC 102 intervention and it all done in a controlled and coordinated way.

When the second failure in the NE2 pair of nodes takes place the proposed method starts: First of all, the VTSC 102 in charge of NE1' (as it is the last node that has lost the connectivity) will start searching for a new multi-layer path. This is the result of the workflow designed for deciding which VTSC 102 should start the multi-layer restoration procedure. Once the VTSC 102 knows it has to start the multi-layer restoration, it consults its possible adjacencies table (let's assume the table is already filled as result of the continuous operation of the network) and decides based in the metric of every possible adjacency and the needed capacity to recover the affected traffic. In this case, the adjacency suggested will be NE1'- NE3'.

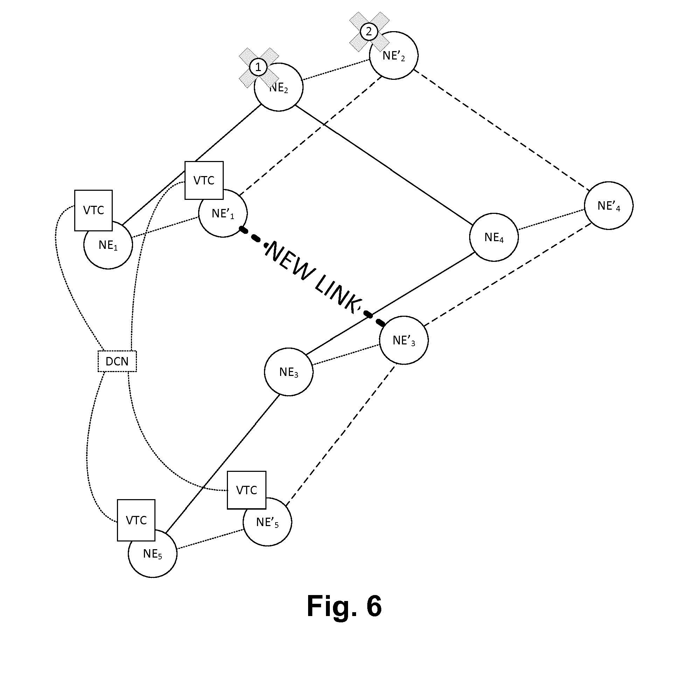

As the suggested adjacency is NE1'-NE3', the VTSC 102 in charge of NE1' will send a TE-LINK-TEARDOWN message (part of the extended PCEP messages) to the VTSC 102 in charge of NE5' to inform it is needed to free some interfaces needed to drive the traffic from NE1' to NE4' through NE3'. The VTSC 102 in charge of NE5' will configure the NE5 node pair to move the needed traffic capacity to the link between NE5-NE3. Once it is done, the VTSC 102 will inform the VTSC 102 in charge of NE1' about the free interfaces to create the new adjacency. As illustrated in Fig. 6 the new link NE1'-NE3' is established as result of a TE-LINK-SUGGESTION message from the VTSC 102 of NE1' to the VTSC 102 of NE3'. The traffic from NE1 pair to NE4 pair is recovered in an automated way.

The scope of the invention is defined in the following set of claims.

## Claims

1. A method for restoring and recovering traffic in multi-layer communication networks after two or more failures, wherein a multi-layer communication network comprises at least two different network layers, an upper layer, said upper layer conducting traffic and including a duplicated infrastructure with a plurality of pair of upper layer nodes, and a lower layer, said lower layer being a transport network providing connectivity between upper layer nodes, wherein traffic is recovered after a first failure of at least one upper layer node of said pair of layer nodes or one lower layer node or one link between lower layer nodes, in which said traffic is conducted using said duplicated upper layer infrastructure, **characterized in that** in order to recover said traffic from a second failure the method comprises using at least one virtual controller device for establishing, for a selected pair of upper layer nodes, an alternative path through the lower layer for conducting said traffic, and for deleting selected paths through the lower layer, said at least one virtual controller device obtaining transport network information provided by a transport layer computation entity computing the feasibility of a new link between said pair of layer nodes using said transport network.

2. A method according to claim 1, further comprising using the information obtained from at least one path computation entity for recovering said traffic from a second failure, said at least one path computation entity being reachable by said upper layer in order to compute paths thereof.

3. A method according to claims 1 or 2, wherein said feasibility of said new link between said pair of layer nodes comprises computing the reserved maximum bandwidth needed in said link, the availability of free interfaces to hold the new link, and the links to be torn down to free an interface to hold the new link.

4. A method according to claims 1 or 2, wherein said transport layer computation entity is a lower layer path computation entity.

5. A method according to claim 2, wherein when no connection is available between two of said pair of layer nodes, the method comprises deleting one or more redundant links to free interfaces and creating one or more links between another pair of layer nodes by means of said upper layer path computation entity through an interaction with said virtual controller device.

6. A method according to claim 5, wherein said interaction between the upper layer path computation entity and the virtual controller device comprises:
- the sending of a Potential Virtual Topology retrieve request message from the upper layer path computation entity to the virtual controller device in order to request the potential virtual topology available;
- the sending of one or more TE-Link suggestion message from the upper layer path computation entity to the virtual controller device; and
- a TE-Link suggestion confirmation message or a TE-Link suggestion failure message from the virtual controller device to the upper layer path computation entity.
- the sending of one or more TE-Link Tear down suggestion message from the upper layer path computation entity to the virtual controller device; and
- a TE-Link Tear Down suggestion confirmation message or a TE-Link Tear Down failure message from the virtual controller device to the upper layer path computation entity.

7. A method according to claims 1 or 2, further comprising coordinating said virtual controller device with a plurality of other virtual controller devices in order to establish said alternative path.

8. A method according to claim 7, wherein said coordination comprises suggesting the creation of new connections or tearing down existing connections to other pair of layer nodes through said other plurality of controller devices.

9. A system for restoring and recovering traffic network in multi-layer communication networks after failure, wherein a communication network comprises:
- at least two different network layers, an upper layer (111) and a lower layer (112), said upper layer (111) including a duplicated infrastructure with a plurality of pair of layer nodes and said lower layer being a transport network; and
- a transport layer computation entity (104) at least computing a path between two transport nodes (114), **characterized in that** comprises at least one virtual controller device (102), located in a single entity or distributed along said communication network in multiple entities, controlling one or more of said pair of layer nodes configured to establish, for a selected pair of upper layer nodes, an alternative path through the lower layer for conducting said traffic, and for deleting selected paths through the lower layer.

10. A system according to claim 9, wherein said upper layer (111) is an IP/MPLS network.

11. A system according to claims 9 or 10, further comprising an IP/MPLS path computation entity (103) reachable by said plurality of pair of layer nodes and by the virtual controller device (102) configured to compute paths in the upper layer and to create, when no connection is available between said pair of layer nodes, another link to another pair of layer nodes.

12. A system according to claim 11, further comprising:
- a first communication interface (201) configured for providing communication between said IP/MPLS path computation entity (103) and said virtual controller device (102); and
- a second communication interface (202) configured for providing communication between said transport layer computation entity (104) and the virtual controller device (102).

13. A virtual controller device, **characterized in that** comprises:
- operating means for running in at least two different network layers, an upper layer and a lower layer (111 and 112), said lower layer being a transport network; and
- first cooperating means for interacting with a transport layer computation entity (104) to obtain transport network information.

14. A virtual controller device according to claim 13, further comprising second cooperating means for interacting with an IP/MPLS path computation entity (103).

15. A virtual controller device according to previous claims 13 or 14, further comprising discovering means for determining other virtual controller devices in said multi-layer communication network and suggesting means for creating new connections or tearing down existing ones to other pair of layer nodes through said other plurality of controller devices determined.
